# EUROPEAN PATENT SPECIFICATION

(11) **EP 4 183 011 B1**
(45) Date of publication and mention of the grant of the patent: **25.02.2026**
(21) Application number: 21748980.6
(22) Date of filing: 19.07.2021
(51) Int. Cl.: H02G 3/04, F16L 5/14, H02G 3/22

(54) **COVER FOR MULTI CABLE TRANSIT FRAME**
ABDECKUNG FÜR EIN MEHRKABEL-TRANSITGERÜST
COUVERCLE POUR ARMATURE DE TRANSIT MULTICÂBLE

(30) Priority: 20.07.2020 SE 2050912
(43) Date of publication of application: 24.05.2023
(73) Proprietor: Sellbrand, Joakim, 612 46 Finspång (SE); Engmark, Christian, 612 92 Finspång (SE)
(72) Inventor: Sellbrand, Joakim, 612 46 Finspång (SE); Engmark, Christian, 612 92 Finspång (SE)
(74) Representative: Zacco Sweden AB
(86) International application number: PCT/SE2021/050736
(87) International publication number: WO 2022/019819

(56) References cited:
- DE-B- 1 216 957
- JP-A- 2003 018 723
- ANONYMOUS: "Installation instructions", 4 September 2019 (2019-09-04), pages 1 - 2, XP093306442, Retrieved from the Internet <URL:https://www.roxtec.com/en/products/system-components/accessories/roxtec-dd-cover/> [retrieved on 20250820]

## Description

### Technical field

The present invention relates generally to a multi cable transit frame with a cover.

### Background art

Multi cable transit frames are frames for openings in walls, floors or ceilings, through which pipes or cables are guided between rooms or floors. In its final, mounted form, the multi cable transit frame is filled with throughgoing cables or pipes and other filling components to create a completely packed and gastight passage for the cables or pipes. However, during construction before the final formed is reached, the frame is partially or completely laid open. This allows for example dirt, dust, moisture or unwanted objects to enter through the frame. An even greater hazard is presented when the frame is arranged between floors, and heavy objects such as tools may accidentally fall through the frame and injure people on the floor below. Sometimes even worse, people may accidentally step through the frame. Therefore, there is a need for a cover for multi cable transit frames to be used during construction.

A multi cable transit frame is inserted into an opening in a wall, floor or ceiling. It may for example be circular or rectangular. A frame can be used on its own or combined with several additional frames to form a frame grid, depending on the amount of cables that are to be led through a specific opening in a wall or floor. During filling of the multi cable transit frame, each cable which is led through the frame is enclosed in a block, commonly having a square outer cross-section, to ensure a gastight sealing in the transit. Each block comprises two halves arranged on each side of a cable when it is in the frame. Along an inside of the frame, a row of one or several blocks are arranged and held in place by a plate. A plate is a metal plate between rows of blocks and thus separating a first row from a subsequent row of blocks and it keeps the blocks in place. Finally, pressure is applied on the cables, blocks and plates by inserting a wedge which locks the structure. During mounting of the cables, a row of cables and their respective blocks are inserted to the frame and subsequently a plate is inserted in contact with the blocks. A pressure means, for example in the form of a jack or a spring or a wedge, is arranged between the plate and an opposite inside surface of the frame to create the pressure on the plate in order to hold the blocks together and to keep a gastight seal of the first row. The next row can then be mounted, and the pushing means is transferred to put a pressure on a subsequent plate, thereby holding two rows in place, and so on until the entire frame is filled.

Covers for multi cable transit frames are commercially available, however they present many shortcomings. For example, the user is commonly required to fasten the cover from a side opposite to that which the cover is inserted. In the case where the frame is positioned between floors, the user has to insert the cover from above, then go to the floor below to fasten the cover, which is time consuming and furthermore hazardous due to the fact that the user has to climb high up to fasten the cover which is in the ceiling. Furthermore, covers presently available do not allow the user to adjust how much of the multi cable transit frame is to be covered. This means that, in order for the user to access the frame, the entire cover has to be removed. This for example leads to the frame being uncovered for the duration of the mounting of the cables. Furthermore, there is a need for a cover which is easy and economical to manufacture and with a weight which does not cause unnecessary burden on the user.

Today, even though different covers are available, one of the most common ways of covering multi cable transit frames is using cardboard and specialized tape. A construction worker thus has to cut a piece of cardboard suitable for the size of the frame and tape it into place. This is not only time consuming, the specialized tape may be expensive and only adapted for one time use.

A relevant prior art document is the installation instruction manual for the Roxtec DD cover retrieved at https://www.roxtec.com/en/products/system-components/ accessories/roxtec-dd-cover/ (EPO reference XP093306442). This document shows a cover plate with gasket designed for multi-cable transit frames. It describes components (cover plate, angle bar, wing nut) and explains how to mount the cover by inserting it into the frame, rotating the angle bar, and tightening the wing nut to compress the gasket and ensure sealing.

JP2203018723A shows a wire protective cover comprising a channel having a basic frame with sidewalls facing each other in the longitudinal direction. A lid is arranged for closing an opening in the longitudinal direction of the channel.

DE1216957B is related to a wiring duct suitable for attachment to a wall and of the type having a rectangular cross section but with an open side, which is adapted to be closed by means of a lockable cover.

These and other problems may be solved by a cover for a multi cable transit frame according to the present invention.

### Summary of invention

An object of the present invention is to address at least the problems outlined above. Problems of prior art comprise providing a cover for a multi cable transit frame which is safe to use and may be operated from one single side of the frame, and which allows the coverage of the frame to be adjustable between cover the entire frame and only cover a part of the frame. Furthermore, providing a cover which is easy to use, easy to manufacture, which is light and economical.

According to the present invention there is provided a multi cable transit frame with a cover as defined in claim 1.

In an exemplary embodiment of the invention, the securing element comprises exactly two legs and a bridge connecting said legs to form a bracket shape.

In an exemplary embodiment of the invention, the securing element is separate from the lid and wherein end portions of the bridge extend into tabs and the lid comprises two opposite edges being folded onto the bottom surface to each form a sliding groove, wherein the tabs are insertable into the sliding grooves to slidably attach the securing element to the lid.

In an exemplary embodiment of the invention, the bridge is flexible between an arched and a flat shape, and wherein the bridge is adapted to be flexed into the flat shape in order to be insertable into the sliding grooves of the lid.

According to the invention, the lid is slidable in relation to the securing element in order to adjust how much of the first end portion of the multi cable transit frame is to be covered.

In an exemplary embodiment of the invention, each foot is, in its operative position, arranged to engage a second end portion of the multi cable transit frame.

In an exemplary embodiment of the invention, each foot is, in its operative position, arranged to engage an inner circumferential groove of the multi cable transit frame.

There is also provided a method of covering a multi cable transit frame as defined in claim 7.

In an exemplary embodiment of the invention, wherein, when the cover is to be removed, the cover exits in the direction of said first end portion.

### Brief description of drawings

The invention is now described, by way of example, with reference to the accompanying drawings, in which:
Fig. 1 displays a top view of a multi cable transit frame and a cover in its operative position,
Figs. 2a and 2b display top and bottom views of a cover,
Figs. 3a and 3b display top and bottom views of a lid,
Fig. 4 displays a securing element,
Figs. 5a and 5b displays a bottom view of a multi cable transit frame and a cover in its operative position.

### Description of embodiments

In the following, a general description of a multi cable transit frame, MCT-frame, will be given, to be used as reference in the below description of a cover.

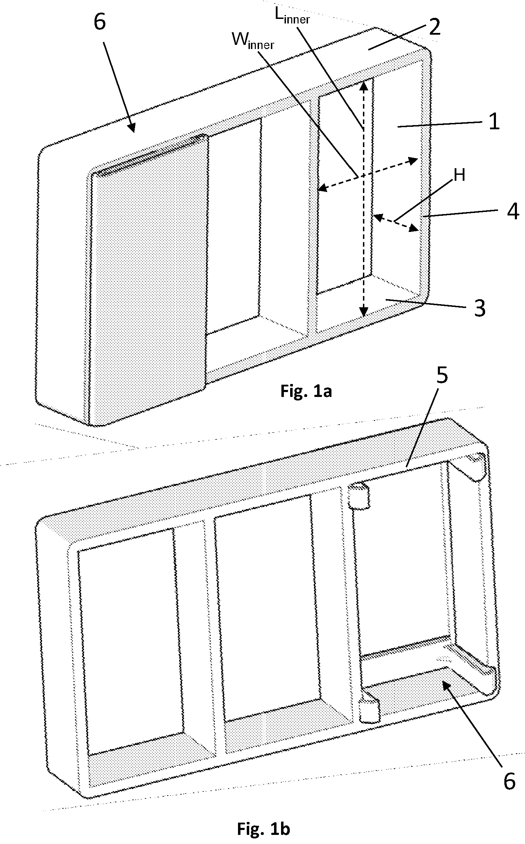

Figs 1a and 1b display a frame grid comprising three MCT-frames. An MCT-frame comprises four essentially perpendicular walls. In a frame grid, a wall of a first MCT-frame may also be a wall of a second MCT-frame. The four walls are a first and second side wall 1, a back wall 2 and a front wall 3. The walls define an inner cable space through which cables may be guided, and which may also be filled with blocks and plates. The frame has a first end portion 4 and a second end portion 5. When the frame is fastened in an opening in for example a wall, the first end portion 4 is arranged on one side of said wall, and the second end portion 5 is arranged on the opposite side of said wall. Cables are guided in through the first end portion 4, through the cable space and out through the second end portion 5.

The inner width Wᵢₙₙₑᵣ of an MCT-frame, defined as the distance between the two opposite inner surfaces of the first and second side walls 1, may be different widths. Nonlimiting examples include 40 mm or 60 mm or 120 mm. The inner length Lᵢₙₙₑᵣ of an MCT-frame, defined as the distance between the two opposite inner surfaces of the front and back wall 2, may be different lengths. Nonlimiting examples include 100 mm, 160 mm, 220 mm, 280 mm. The height H of an MCT-frame, defined as the distance between the first and second end portion 5, may be different heights. Nonlimiting examples include heights between 60 mm and 250 mm.

Furthermore, inner surfaces of the walls facing the cable space may have an inner groove parallel to the end portions of the MCT-frame.

In the following, a detailed description of a cover 6 according to the invention will be given.

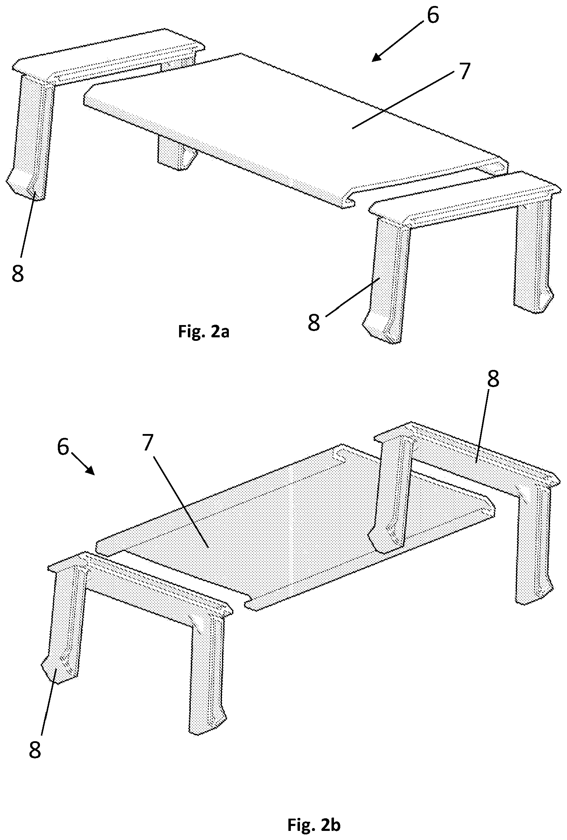

Fig. 2a and 2b display a top view and a bottom view of a cover 6 according to an embodiment of the invention. The cover 6 generally comprises a lid 7 and at least one securing element 8. The embodiments of Figs 2a and 2b comprise two securing elements 8. The cover 6 is arranged to cover at least part of an MCT-frame. In some embodiments, the cover 6 covers one or more than one MCT-frame. In some embodiments, the cover 6 in arranged to be adjustable, to cover a desired amount of an MCT-frame. Furthermore, in its operative position, the lid 7 is arranged to be outside the MCT-frame adjacent to the first end portion 4, and the securing element 8 is arranged to extend into the cable space of the MCT-frame. Each securing element 8 is slidably attached to the lid 7.

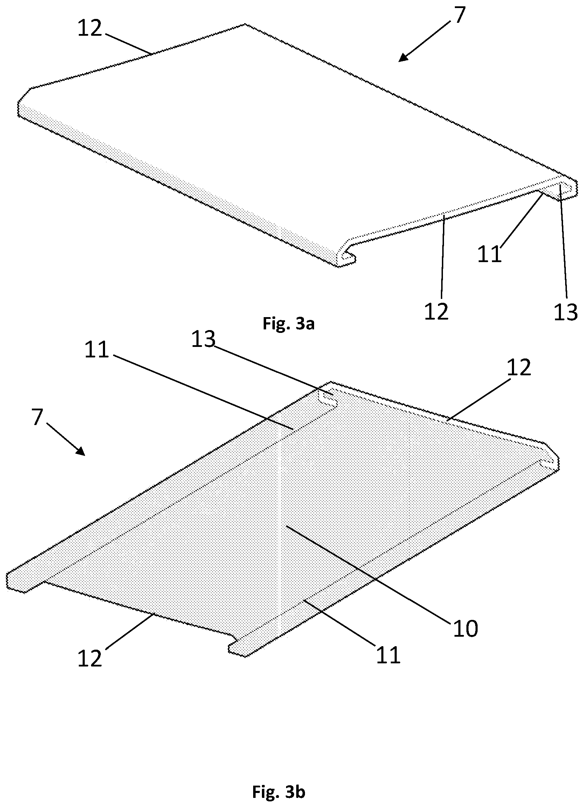

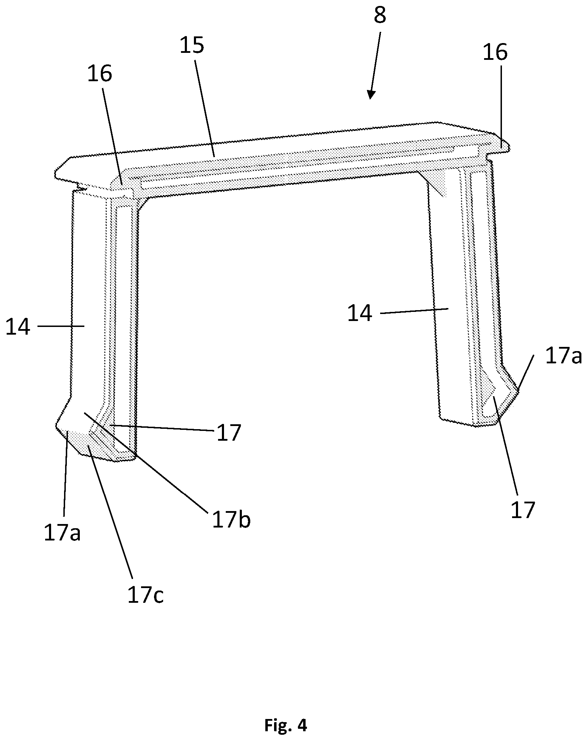

Figs. 3a and 3b display a top view and a bottom view of the lid 7. The lid 7 is planar and thereby has a main upper surface 9 and a main bottom surface 10, both being in a plane of the lid 7. The lid 7 is furthermore rectangular and therefore has four essentially perpendicular edges, namely a first and second side edge 11 defining a width of the lid 7, and back and front edges 12 defining a length of the lid 7. The lid 7 has a width equal to or larger than the inner width Wᵢₙₙₑᵣ of the MCT-frame. In the embodiment shown in Figs. 3a and 3b, the length of the lid 7 is essentially equal to a length of the MCT-frame. However, in alternative embodiments, the length of the lid 7 may be other lengths. It may for example have a length equal to or shorter than that of the inner length Lᵢₙₙₑᵣ of the MCT-frame, but it may also be longer so as to make it possible for a user to divide the lid 7, for example by cutting, into pieces with a length suitable to the user. The first and second side edges 11 are furthermore lengthwise folded onto the bottom surface 10 of the lid 7 such that a first and second lengthwise strip of the upper surface 9 faces in the direction of the bottom surface 10. The first and second strip are flat such that the strips, in the operative position of the lid 7, may rest on the first end portion 4 of the MCT-frame to prevent it from exiting through the second end portion 5. The folded first and second side edges 11 each form a sliding groove 13 defined by a bend of the bottom surface 10. Each sliding groove 13 runs along the entire length of the lid 7 and is adapted to slidingly receive the securing element 8, which will be described in detail in relation to Fig. 4.

Fig. 4 displays the securing element 8 of the cover 6. The securing element 8 generally comprises two legs 14, and a bridge 15 connecting the legs 14. The bridge 15 has an upper surface and a bottom surface. Proximal ends of the legs 14 are attached to the bottom surface of the bridge 15, at each outer end of the bridge 15 so that the securing element 8 forms a bracket shape. A distance between outer sides of the legs 14 is substantially equal to the inner width Wᵢₙₙₑᵣ of an MCT-frame. Here, an outer side of a leg 14 refers to the side facing away from the opposite leg 14 of the securing element 8. The legs 14 are furthermore flexible towards each other. The flexibility may for example be achieved by using a yielding material for the legs 14, thus, when a force pushes the legs 14 towards each other, they are displaced due to a flexing of the legs. It may also be achieved by using a yielding material for the bridge 15, thus when a force pushes the legs 14 towards each other, they are displaced due to a flexing of the bridge 15. The purposes of the flexibility will be described below.

Each outer end of the upper surface of the bridge 15 extends to form tab 16. The length of the upper surface is thereby longer than the length of the bottom surface. In an alternative embodiment, the upper and bottom surface are of equal length, and the tabs 16 are formed achieved by shifting the legs 14 such that they are arranged closer to the center of the bottom surface. The tabs 16 are adapted to be slid in the sliding grooves 13 formed by the folded side edges of the lid 7 and thereby slidably attach the securing element 8 to the lid 7. Thereby, the distance between the tabs 16 at the respective outer end of the bridge 15 are adapted to the distance between the sliding grooves 13 of the lid 7 and, during use when the securing element 8 is slidably attached in the sliding grooves 13 of the lid 7, the bridge 15 extends between the sliding grooves 13 of the lid 7, and the legs 14 extend in a direction away from the bottom surface 10 of the lid 7.

In the embodiment shown in Fig. 4, the bridge 15 is flexible between an arched and a flat shape. When force is not applied on the bridge 15 it has the arched shape, and when force is applied through bending or flexing, it is bent into the flat shape. In order for the securing element 8 to be slid into the sliding grooves 13 of the lid 7, a user bends the bridge 15 to become flat, for example by pushing the legs 14 towards each other, inserts the tabs 16 into the sliding grooves 13 and then releases the bending force. The lid 7 prevents the bridge 15 from returning to its arched shape, and a force is thus created from the securing element 8 on the lid 7 and thereby locks the securing element 8 to the lid 7. The force from the securing element 8 on the lid 7 is large enough to keep the securing element 8 from accidentally sliding out of the lid 7, and small enough to be possible to overcome by a user, when the user wants to slide the securing element 8 along the lid 7 or remove the securing element 8 from the lid 7.

The legs 14 each comprises a securing portion in the form of a foot 17. Each foot 17 is arranged at a distal end of the respective leg 14 in relation to the bridge 15. Each foot 17 is further arranged on the outside of the leg 14. Having the feet 17 arranged on said outside causes the feet 17 of the two legs 14 to extend in opposite directions and, during use, face an inner surface of a side wall of the MCT-frame. Furthermore, each foot 17 is integrally formed with the leg 14 and is formed as triangle having a thickness. Each foot 17 therefore comprises two triangle sides and an edge 17a running between the tips of the triangles, wherein the edge connects an upper slanting surface 17b and a lower slanting surface 17c. Each foot 17 is adapted to, during use, engage the MCT-frame to secure the cover 6 to the MCT-frame. It may do so in at least two different ways. Firstly, the legs 14 may be longer than the height H of the MCT-frame onto which the cover 6 is to be attached. Therefore, each foot 17 will be arranged, in its operative position, on the side of the second end portion 5 of the MCT-frame. Here, the upper slanting surface 17b of each foot 17 may engage a surface of said second end portion 5, to prevent the cover 6 from being displaced in the direction of the first end portion 4. Secondly, the legs 14 may be shorter than the height H of the MCT-frame. In this case, each foot 17 is arranged to fit in the inner groove of MCT-frame and engage the MCT-frame through both the upper 17b and lower slanting surface 17c, and thus prevent the cover 6 from being displaced through the first end portion 4.

As described above, the securing element 8 is flexible between an arched shape and a flat shape of the bridge 15. The flexible construction of the securing element 8 further has the advantage that the legs 14 can be flexed through pushing by a user towards each other in order to facilitate insertion of the cover 6 into the MCT-frame. When the cover 6 is in its operative position and the user releases the pressure, the foot 17 on each leg 14 creates a responsive pressure on the MCT-frame and thereby secures the cover 6 to the MCT-frame.

The cover 6 may for example be formed by a metal, such as aluminum or steel, or by a polymer such as a flame-retardant polymer and/or a halogen free polymer, or by a cellulose material. Furthermore, the lid 7 and the securing element 8 may be formed by the same or different materials.

Returning now to Figs. 1a and 1b which display the cover 6 in its operative position. Following is a description of how a user may use the cover 6 to cover an MCT-frame.

The user firstly attaches a desired number of securing elements 8 to the lid 7. The desired number of securing elements 8 depend on the length of the lid 7. A longer lid 7 may require a plurality of securing elements 8, compared to a shorter which may only require one. In Fig. 4, two securing elements 8 are used. The user attaches each securing element 8 by firstly applying a force to the securing element 8 to flatten the arched shape of the bridge 15, and subsequently slides the tabs 16 of said bridge 15 into the sliding grooves 13 on the bottom surface 10 of the lid 7. The user slides one securing element 8 to be adjacent to the front edge of the lid 7, and the other securing element 8 to be adjacent to the back edge of the lid 7. The cover 6 is now prepared to be inserted into an MCT-frame. The user determines a first end portion 4 through which the cover 6 is to be inserted. Because a distance between the outer sides of the legs 14 is substantially equal to the inner width Wᵢₙₙₑᵣ of an MCT-frame, the user may apply a pressure on the legs 14 such that they flex towards each other to facilitate insertion into the cable space. The user may also place the lower slanting sides of each foot 17 on the first end portion 4 and insert the securing element 8 by pushing the cover 6 into the cable space. As the securing element 8 is inserted into the cable space of the MCT-frame, the lower slanting sides of each foot 17 glides along the inner side surfaces of the MCT-frame. When the securing element 8 is inserted, a responsive pressure is therefore created from the securing element 8 on the MCT-frame. In its operative position, the outer sides of the legs 14 are therefore adjacent to the inner surfaces of the side walls 1 of the MCT-frame. Depending on the height H of the MCT-frame, each foot 17 of the securing element 8 engages either the second end portion 5 of the MCT-frame, or the groove of the MCT-frame. The cover 6 is therefore secured to the MCT-frame by the flexing pressure from the securing element 8. Furthermore, in its operative position, the lid 7 rests on the first end portion 4 of the MCT-frame and prevents the cover 6 from exiting through the second end portion 5.

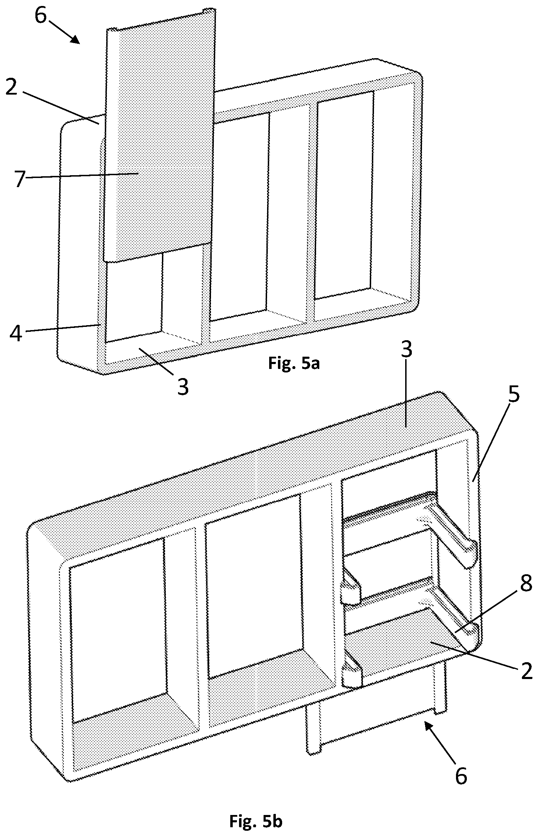

Figs. 5a and 5b display how the cover 6 may be adjusted to only cover a part of the first end portion 4 of the MCT-frame. This may be desirable when the user wants to guide cables through the MCT-frame, and the associated blocks and plates are to be mounted surrounding the cables. The user adjusts the cover 6 by pushing the cover 6 in a direction towards the back wall 2 of the MCT-frame. Upon doing so, the securing element 8 adjacent to the back edge will be blocked from movement by the back wall 2 of the MCT-frame and will thus slide in relation to the lid 7. At this point, the securing element 8 adjacent to the front edge will follow the sliding of the lid 7. This leads to a partial uncovering of the MCT-frame, the user may for example uncover enough of the MCT-frame to guide a first row of cables through and mount said associated blocks and plate. As the first row has been completed, the user may continue to slide the lid 7 to uncover enough to guide a second row of cables through, and so on until the entire MCT-frame is filled. As the user reaches the last row, the cover is pulled out from the MCT-frame in the direction of the first end portion 4. Finally, a wedge may be mounted.

A cover for a multi cable transit frame has now been described. It will be understood that the inventive idea is not limited to this but can vary within the scope of the appended claims.

All the described alternative embodiments above or parts of an embodiment can be freely combined or employed separately from each other as long as the combination is not contradictory.

## Claims

1. A multi cable transit frame with a cover (6), wherein
the multi cable transit frame comprises four walls (1, 2, 3) defining a cable space through which cables may be guided, a first end portion (4) and a second end portion (5) arranged opposite to the first end portion (4) such that cables are guidable through the first end portion (4) through the cable space and out through the second end portion (5),
wherein the cover (6) comprises a planar lid (7) having a bottom surface (10) arranged to, in its operative position, face the first end portion (4) of the multi cable transit frame to cover at least part of the first end portion (4), and
a securing element (8) insertable from the first end portion (4) into the cable space of said multi cable transit frame to detachably secure the lid (7) to the multi cable transit frame,
**characterized in that** the securing element (8) comprises at least two legs (14) extending from the bottom surface (10) of the lid (7) and being flexible towards each other, and wherein each leg (14) comprises a foot (17) arranged at an end of each leg (14) being distal in relation to the lid (7), and arranged to, in its operative position, engage the multi cable transit frame to secure the cover (6) to the multi cable transit frame,
and **in that** the lid (7) is slidable in relation to the securing element (8).

2. The multi cable transit frame with cover (6) according to claim 1, wherein the securing element (8) comprises exactly two legs (14) and a bridge (15) connecting said legs (14) to form a bracket shape.

3. The multi cable transit frame with cover (6) according to claim 1 or 2, wherein the securing element (8) is separate from the lid (7) and wherein end portions of the bridge (15) extend into tabs (16) and the lid (7) comprises two opposite edges being folded onto the bottom surface (10) to each form a sliding groove, wherein the tabs (16) are insertable into the sliding grooves (13) to slidably attach the securing element (8) to the lid (7).

4. The multi cable transit frame with cover (6) according to claim 3, wherein the bridge (15) is flexible between an arched and a flat shape, and wherein the bridge (15) is adapted to be flexed into the flat shape in order to be insertable into the sliding grooves (13) of the lid (7).

5. The multi cable transit frame with cover (6) according to any of the preceding claims, wherein each foot (17) is, in its operative position, arranged to engage a second end portion (5) of the multi cable transit frame.

6. The multi cable transit frame with cover (6) according to any of the preceding claims, wherein each foot (17) is, in its operative position, arranged to engage an inner groove of the multi cable transit frame.

7. A method of covering a multi cable transit frame using a multi cable transit frame and cover (6) according to any of the preceding claims, comprising the steps of:
determining a first end portion (4) of the multi cable transit frame,
inserting the securing element (8) into the cable space from said first end portion (4) such that each foot (17) engages the multi cable transit frame to secure the cover (6) to the multi cable transit frame, adjusting how much of the first end portion (4) of the multi cable transit frame is to be covered by the cover (6) by sliding lid (7) in relation to the securing element (8).

## Patentansprüche

1. Mehrkabel-Transitgerüst mit einer Abdeckung (6), wobei
das Mehrkabel-Transitgerüst vier Wände (1, 2, 3), die einen Kabelraum definieren, durch den Kabel geführt werden können, einen ersten Endabschnitt (4) und einen zweiten Endabschnitt (5), der derart gegenüber dem ersten Endabschnitt (4) angeordnet ist, dass Kabel durch den ersten Endabschnitt (4) durch den Kabelraum und durch den zweiten Endabschnitt (5) heraus führbar sind, umfasst,
wobei die Abdeckung (6) einen ebenen Deckel (7), der eine Bodenfläche (10) aufweist, die dazu angeordnet ist, in ihrer Betriebsposition dem ersten Endabschnitt (4) des Mehrkabel-Transitgerüsts zugewandt zu sein, um mindestens einen Teil des ersten Endabschnitts (4) abzudecken, und
ein Sicherungselement (8), das von dem ersten Endabschnitt (4) in den Kabelraum des Mehrkabel-Transitgerüst einführbar ist, um den Deckel (7) abnehmbar an dem Mehrkabel-Transitgerüst zu sichern, umfasst,
**dadurch gekennzeichnet, dass**
das Sicherungselement (8) mindestens zwei Schenkel (14) umfasst, die sich von der Bodenfläche (10) des Deckels (7) erstrecken und biegsam zueinander sind, und wobei jeder Schenkel (14) einen Fuß (17) umfasst, der an einem Ende jedes Schenkels (14) angeordnet ist, das in Bezug auf den Deckel (7) distal ist, und dazu angeordnet ist, in seiner Betriebsposition in das Mehrkabel-Transitgerüst einzugreifen, um die Abdeckung (6) an dem Mehrkabel-Transitgerüst zu sichern,
und dass der Deckel (7) in Bezug auf das Sicherungselement (8) verschiebbar ist.

2. Mehrkabel-Transitgerüst mit Abdeckung (6) nach Anspruch (1), wobei das Sicherungselement (8) genau zwei Schenkel (14) und eine Brücke (15), welche die Schenkel (14) verbindet, um eine Halteklammerform zu bilden, umfasst.

3. Mehrkabel-Transitgerüst mit Abdeckung (6) nach Anspruch 1 oder 2, wobei das Sicherungselement (8) von dem Deckel (7) getrennt ist und wobei sich Endabschnitte der Brücke (15) in Laschen (16) erstrecken und der Deckel (7) zwei gegenüberliegende Kanten umfasst, die auf die Bodenfläche (10) gefaltet sind, um jeweils eine Schiebenut zu bilden, wobei die Laschen (16) in die Schiebenuten (13) einführbar sind, um das Sicherungselement (8) verschiebbar an dem Deckel (7) zu befestigen.

4. Mehrkabel-Transitgerüst mit Abdeckung (6) nach Anspruch 3, wobei die Brücke (15) zwischen einer gebogenen und einer flachen Form biegsam ist und wobei die Brücke (15) dazu angepasst ist, in die flache Form gebogen zu werden, um in die Schiebenuten (13) des Deckels (7) einführbar zu sein.

5. Mehrkabel-Transitgerüst mit Abdeckung (6) nach einem der vorhergehenden Ansprüche, wobei jeder Fuß (17) in seiner Betriebsposition dazu angeordnet ist, in einen zweiten Endabschnitt (5) des Mehrkabel-Transitgerüsts einzugreifen.

6. Mehrkabel-Transitgerüst mit Abdeckung (6) nach einem der vorhergehenden Ansprüche, wobei jeder Fuß (17) in seiner Betriebsposition dazu angeordnet ist, in eine innere Nut des Mehrkabel-Transitgerüsts einzugreifen.

7. Verfahren zum Abdecken eines Mehrkabel-Transitgerüsts unter Verwendung eines Mehrkabel-Transitgerüsts und einer Abdeckung (6) nach einem der vorhergehenden Ansprüche, umfassend die folgenden Schritte:
Bestimmen eines ersten Endabschnitts (4) des Mehrkabel-Transitgerüsts,
Einführen des Sicherungselements (8) in den Kabelraum von dem ersten Endabschnitt (4) derart, dass jeder Fuß (17) in das Mehrkabel-Transitgerüst eingreift, um die Abdeckung (6) an dem Mehrkabel-Transitgerüst zu sichern, und Anpassen, wie viel von dem ersten Endabschnitt (4) des Mehrkabel-Transitgerüsts durch die Abdeckung (6) abzudecken ist, indem ein Deckel (7) in Bezug auf das Sicherungselement (8) geschoben wird.

## Revendications

1. Armature de transit multicâble avec un couvercle (6), dans laquelle
l'armature de transit multicâble comprend quatre parois (1, 2, 3) définissant un espace de câbles à travers lequel des câbles peuvent être guidés, une première partie d'extrémité (4) et une seconde partie d'extrémité (5) disposée à l'opposé de la première partie d'extrémité (4) de sorte que des câbles puissent être guidés à travers la première partie d'extrémité (4) à travers l'espace de câbles et sortir à travers la seconde partie d'extrémité (5),
dans laquelle le couvercle (6) comprend un volet plan (7) ayant une surface inférieure (10) disposée pour, dans sa position opérationnelle, faire face à la première partie d'extrémité (4) de l'armature de transit multicâble pour couvrir au moins une partie de la première partie d'extrémité (4), et
un élément de fixation (8) insérable à partir de la première partie d'extrémité (4) dans l'espace de câbles de ladite armature de transit multicâble pour fixer de manière amovible le volet (7) à l'armature de transit multicâble,
**caractérisée en ce que**
l'élément de fixation (8) comprend au moins deux pattes (14) s'étendant à partir de la surface inférieure (10) du volet (7) et étant flexibles l'une vers l'autre, et dans laquelle chaque patte (14) comprend un pied (17) disposé au niveau d'une extrémité de chaque patte (14) qui est distale par rapport au volet (7), et disposé pour, dans sa position opérationnelle, venir en prise avec l'armature de transit multicâble pour fixer le couvercle (6) à l'armature de transit multicâble,
et **en ce que** le volet (7) peut coulisser par rapport à l'élément de fixation (8).

2. Armature de transit multicâble avec couvercle (6) selon la revendication 1, dans laquelle l'élément de fixation (8) comprend exactement deux pattes (14) et un pont (15) reliant lesdites pattes (14) pour former une forme de support.

3. Armature de transit multicâble avec couvercle (6) selon la revendication 1 ou 2, dans laquelle l'élément de fixation (8) est séparé du volet (7) et dans laquelle des parties d'extrémité du pont (15) s'étendent en languettes (16) et le volet (7) comprend deux bords opposés étant repliés sur la surface inférieure (10) pour former chacun une rainure de coulissement (13), dans laquelle les languettes (16) sont insérables dans les rainures de coulissement (13) pour attacher de manière coulissante l'élément de fixation (8) au volet (7).

4. Armature de transit multicâble avec couvercle (6) selon la revendication 3, dans laquelle le pont (15) est flexible entre une forme arquée et une forme plate, et dans laquelle le pont (15) est adapté pour être fléchi dans la forme plate afin d'être insérable dans les rainures de coulissement (13) du volet (7).

5. Armature de transit multicâble avec couvercle (6) selon l'une quelconque des revendications précédentes, dans laquelle chaque pied (17) est, dans sa position opérationnelle, disposé pour venir en prise avec une seconde partie d'extrémité (5) de l'armature de transit multicâble.

6. Armature de transit multicâble avec couvercle (6) selon l'une quelconque des revendications précédentes, dans laquelle chaque pied (17) est, dans sa position opérationnelle, disposé pour venir en prise avec une rainure interne de l'armature de transit multicâble.

7. Procédé pour couvrir une armature de transit multicâble utilisant une armature de transit multicâble et un couvercle (6) selon l'une quelconque des revendications précédentes, comprenant les étapes consistant à :
déterminer une première partie d'extrémité (4) de l'armature de transit multicâble,
insérer l'élément de fixation (8) dans l'espace de câbles à partir de ladite première partie d'extrémité (4) de sorte que chaque pied (17) vienne en prise avec l'armature de transit multicâble pour fixer le couvercle (6) à l'armature de transit multicâble, ajuster quelle proportion de la première partie d'extrémité (4) de l'armature de transit multicâble doit être couverte par le couvercle (6) en faisant coulisser le volet (7) par rapport à l'élément de fixation (8).
